Europäisches Patentamt

(19) European Patent Office

Office européen des brevets

(11) Publication number: **0 327 370**
**A2**

## EUROPEAN PATENT APPLICATION

(21) Application number: **89301023.1**

(22) Date of filing: **02.02.89**

(51) Int. Cl.⁴: **B 60 S 9/20**

(30) Priority: **05.02.88 IL 85323**

(43) Date of publication of application:
**09.08.89 Bulletin 89/32**

(84) Designated Contracting States:
**AT BE CH DE ES FR GB GR IT LI LU NL SE**

(71) Applicant: **C.M.S. CAR MANEUVERING SYSTEMS LTD.**
**P.O.B. 117**
**Tirat Hacarmel 30250 (IL)**

(72) Inventor: **Asherof, Eliezer**
**25 Shoham Street**
**Haifa (IL)**

(74) Representative: **MacFarlane, John Anthony Christopher**
**et al**
**PAGE & CO Temple Gate House Temple Gate**
**Bristol BS1 6PL (GB)**

(54) Lifting and manoeuvring device for motor vehicles.

(57) A lifting and maneuvering device for a front wheel drive motor vehicle (1) having a motor vehicle frame (10), a vehicle motor for propelling the motor vehicle by its front wheels (3), a differential transmission and two sets of vehicle wheels (3,3') each mounted on an axle for supporting the motor vehicle on a vehicle supporting surface comprises a secondary wheel assembly (4) mounted to the motor vehicle frame (10) in proximity to the middle of the rear axle of the motor vehicle, the secondary wheel assembly including (a) a scissors type jack (A/B) adapted to be raised and lowered between a retracted position and an operative position; (b) a maneuvering wheel (6) attached to the lower end of said jack (A/B) and said wheel (6) being oriented so that its axis intersects the front wheel axis in proximity to one of the front wheels (3); (c) drive means (35/36/38,38') for moving said jack (A/B) and maneuvering wheel (6) up or down; and (d) means (S₁/L.S.₁) for activating said drive means (35/36/38,38') so that when the jack (A/B) is in the operative position the maneuvering wheel (6) comes in contact with the vehicle supporting surface and liftsd the rear set of vehicle wheels (3') off the vehicle support surface.

FIG.1.

## Description

### LIFTING AND MANOEUVRING DEVICE FOR MOTOR VEHICLES

The present invention relates to a motor vehicle comprising a lifting and parking device for lowering retractable parking wheels. Specifically the invention concerns front wheel drive motor vehicles equipped with such a device adjacent to the rear wheels.

In order to facilitate parking a motor vehicle, many different types of lifting and maneuvering devices have been designed including an auxiliary wheel assembly mounted adjacent to the front or rear end of the vehicle. These usually include vertical drive means for lowering the assembly to an operative position in engagement with the vehicle supporting surface, to permit the respective end of the vehicle to be maneuvered in a lateral direction with respect to its opposite end, and thereby to assist the driver in parking the vehicle in very narrow parking spaces. As far as we are aware, however, none of the previous proposed devices has yet found wide commercial use, and we believe this to be because of the complicated and expensive constructions of these previously proposed devices.

U.S. Patent No. 4,605,086 discloses a lifting and maneuvering device for motor vehicles, including a drive motor, at least two drive wheels, and a differential transmission, characterized in that the device comprises an auxiliary wheel assembly mounted adjacent to the front and/or to the rear wheels of the vehicle, vertical drive means for raising the auxiliary wheel assembly to a retracted position adjacent to the vehicle body, or for lowering the assembly to an operative position in engagement with the vehicle supporting surface to thereby lift the front and/or rear wheels of the vehicle; and means for fixing the orientation of the auxiliary wheel assembly such that its axis is parallel to or at an oblique angle to the longitudinal axis of the vehicle, whereby propelling the vehicle by its drive motor while the assembly is in its operative position will cause the vehicle to rotate.

In another feature of the above mentioned patent, two auxiliary wheel assemblies may be provided, one mounted adjacent to the front wheels and one mounted adjacent to the rear wheels of the vehicle, each assembly being selectively actuated by the driver. Such an arrangement greatly enhances the capabilities of the device. Thus, such a device may be used for lifting and maneuvering the vehicle in order to enter into or exit from a narrow parking space, or to rotate the vehicle with a minimum space, e.g. to orient it in the opposite direction when there is insufficient space to make a normal "U-turn". The system, however, may also be used for lifting the vehicle in order to repair or change any of its wheels, to decrease the load from all its tires during long storage, and to aid in extracting the vehicle from mud, snow or sand.

In the above patent, the auxiliary wheels are attached to the end of a threaded vertical shaft which rotates when raised or lowered thereby rotating the wheels as well until they touch ground. Separate angular direction control means can be connected to the electric motor driving the threaded vertical shaft to selectively control the angular position of the wheel axis.

The prior art, in general, discloses many parking devices having a variety of drive means for lowering and raising auxiliary wheel assemblies. Different means are also used for turning the wheel assemblies to the desired orientation. Most of the devices in the prior art require some type of drive means to rotate the auxiliary wheels in a forward direction. When such drive means, for forward motion of the parking wheel is absent the art teaches the use of breaking means to anchor one of the rear wheels thereby enabling lateral motion of the vehicle when activating the vehicle motor.

Such devices are disclosed for example in U.S. patents 2,162,257; 2,330,894, 2,931,448 and 3,826,322.

In accordance with the present invention there is provided a lifting and maneuvering device for a front wheel drive motor vehicle having a motor vehicle frame, a vehicle motor for propelling the motor vehicle by its front wheels, a differential transmission and two sets of vehicle wheels each mounted on an axle for supporting the motor vehicle on a vehicle supporting surface, comprising:

a secondary wheel assembly mounted to the motor vehicle frame in proximity to the middle of the rear axle of the motor vehicle; characterised in that the secondary wheel assembly comprises

(a) a scissors type jack adapted to be raised and lowered between a retracted position and an operative position;

(b) a maneuvering wheel attached to the lower end of said jack and said wheel being oriented so that its axis intersects the front wheel axis in proximity to one of the front wheels;

(c) drive means for moving said jack and maneuvering wheel up and down; and

(d) means for activating said drive means so that when the jack is in the operative position the maneuvering wheel comes in contact with the vehicle supporting surface and lifts the rear set of vehicle wheels off the vehicle support surface.

The invention is herein described, by way of example only, with reference to the accompanying drawings, in which:

Figure 1 is a side elevation view partly broken away illustrating a front wheel drive motor vehicle equipped with one form of a lifting and maneuvering device in accordance with the present invention,

Figure 2 is an enlarged side view of a preferred auxiliary wheel assembly according to the invention in an extended position,

Figure 3 is an enlarged front view of the preferred auxiliary wheel assembly,

Figure 4 is a side view of the auxiliary wheel assembly in a retracted position,

Figure 5 is a view from underneath of the auxiliary wheel assembly in retracted position,

Figures 6a and 6b schematically show frameworks A and B of a scissors jack,

Figure 7 is a schematic partial view from underneath of the wheel assembly as attached to the frameworks,

Figures 8a and 8b illustrate a trunion joint when in extended and retracted positions,

Figure 9 is a flow diagram of a hydraulic power unit for extending and retracting the auxiliary wheels, and

Figure 10 illustrates the intersection of the maneuvering wheel axis with the front wheel axis of a front wheel drive motor car.

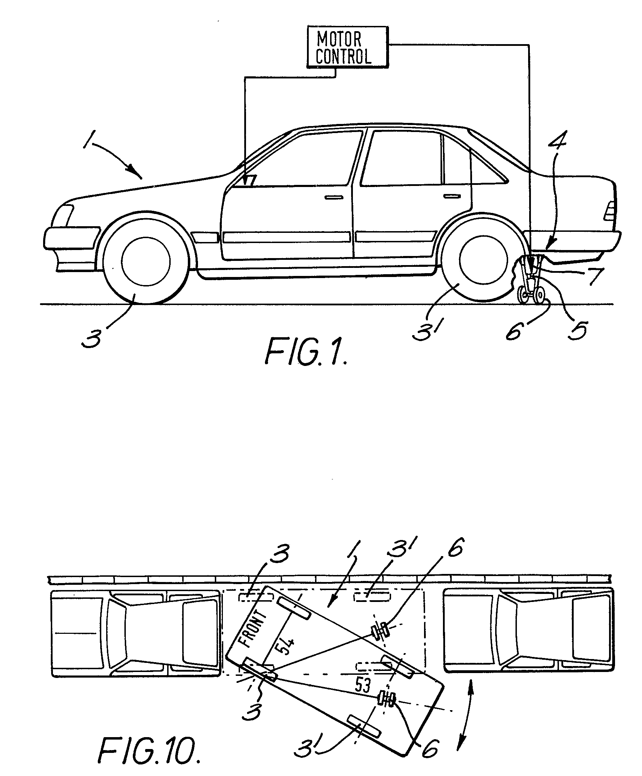

With reference to Figure 1, there is illustrated a front wheel drive motor car generally designated 1, which may be of any of the known designs, including a drive motor, a differential transmission, front wheels 3 and rear wheels 3', at least the two front wheels being drive wheels. The vehicle is equipped with a secondary wheel assembly generally designated 4 mounted to the frame at the rear thereof. The wheel assembly 4 comprises a scissor type jack mechanism 5, maneuvering wheel 6 and drive means 7.

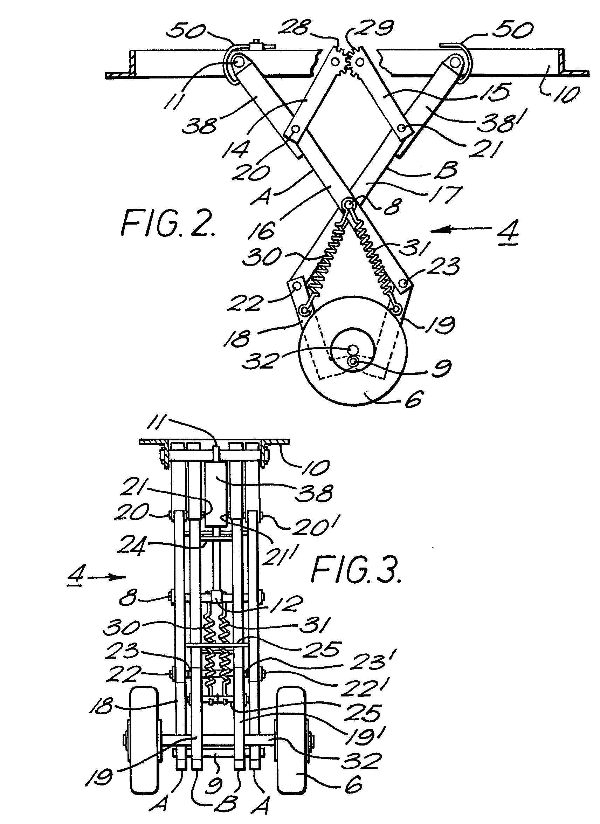

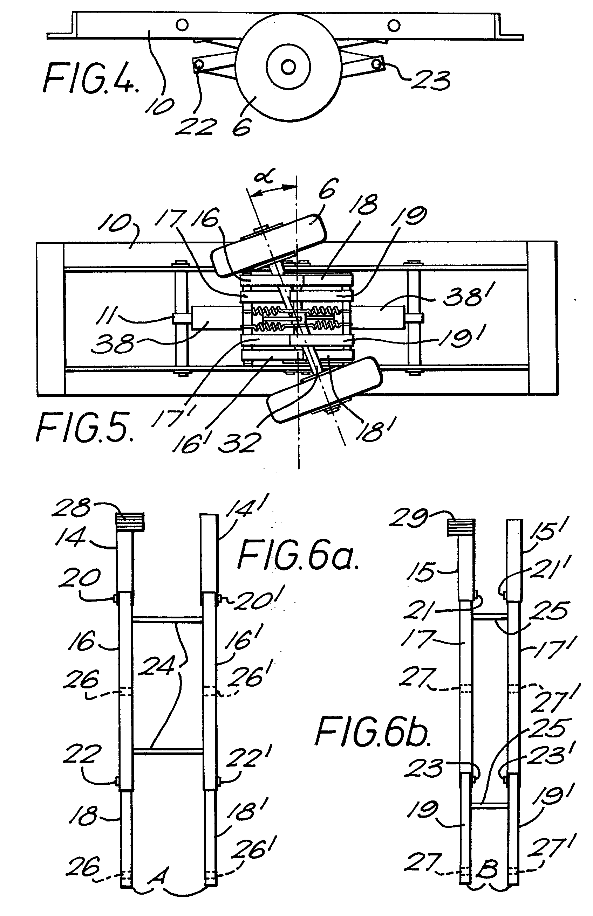

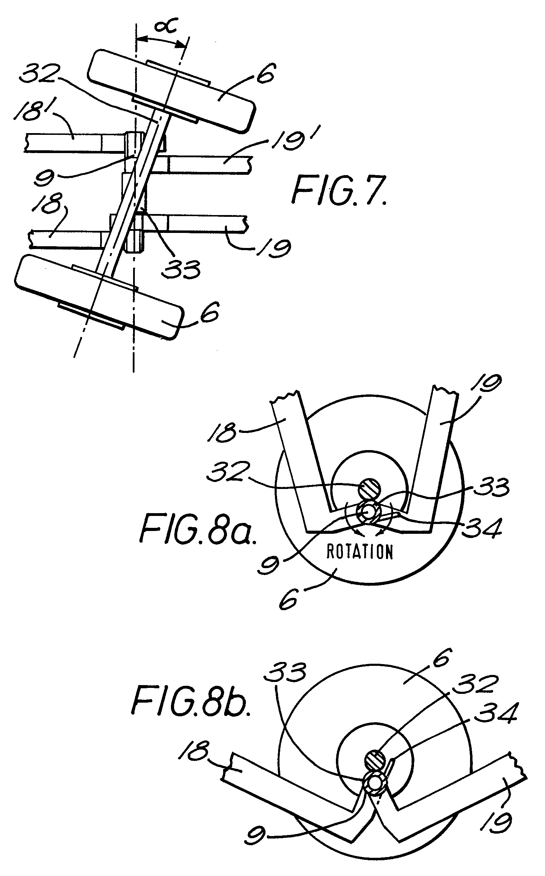

Referring now to Figures 2-7, there is shown a secondary wheel assembly 4 including a scissor type hydraulic jack comprising frameworks A and B (see Figures 6a and 6b), which are pivotally engaged with each other by shafts 8 and 9. The frameworks are mounted pivotally to a steel frame 10, which is attached to the body of the vehicle. Hydraulic pistons 38 and 38' are mounted to the frame 10 at one end 11 and to the frameworks A and B at the other end 12 respectively. These pistons are supplied with pressure fluid such as oil through tubes 50 and provide the means for extending and retracting the wheel assembly 4. A set of auxiliary wheels 6 is mounted on top of the shaft 9, which passes through the lower arms of the frameworks A and B. The frameworks A and B (see Figures 6a and 6b) each comprise six arms 14, 14', 16, 16', 18, 18' and 15, 15', 17, 17', 19, 19' which are connected pivotally at points 20, 20', 21, 21', 22, 22' and 23, 23'. Cross-bars 24 and 25 keep the frameworks A and B in rigid position and prevent warping or wobbling thereof. Framework B, as can be seen, is narrower then framework A, so as to fit into the latter in a scissor-like position. The two frameworks are connected to each other pivotally via shafts 8 and 9, which pass through holes 26, 26' and 27, 27' of arms 16, 16', 17, 17' and 18, 18', 19, 19' respectively. The arms 14 and 15 of frameworks A and B terminate at their upper ends in toothed gears 28 and 29 which engaged each other pivotally at their point of mounting to frame 10. The purpose of this gear is to assure even and symmetrical extension and retraction of the wheels with respect to the vertical axis of the device. Coil springs 30 and 31 are attached to shaft and lower arms 19 and 19' of framework B via cross-bar 25. A set of wheels 6 is attached to the frameworks A and B at an angle α calculated for proper parking of the vehicle. These wheels 6 are mounted to the frameworks A and B by means of a trunion joint as shown in Figures 8a and 8b.

The wheels 6 are mounted on an axle 32. This axle 32 is welded at an angle α to a sleeve-bushing 33, through which the shaft 9 extends thereby forming a trunion joint. Thus when the sleeve-bushing 33 turns around shaft 9, it causes vertical movement of the wheels 6. Therefore, if the vehicle stands on a non-even surface when it is to be lifted off the ground by the auxiliary wheels, the wheels 6 will turn around an imaginary axis perpendicular to the axle 32. This results in the rotation of the sleeve-bushing 33 around shaft 9. As a result of this, the angle α is also changed, but these changes are small and do not influence the functioning of the device. This trunion joint is a complete trunion, i.e. one axis of rotation is along the length of axle 32 and the second axis of rotation is perpendicular to axle 32, caused as a result of the rotation of the sleeve-bushing 33 around shaft 9.

Axle 32 is welded on to the sleeve-bushing 33, which causes the axle 32 to always return to its previous stable position with the help of the weight of the vehicle. At the time that the device is retracted upwards, when the wheels 6 lose contact with the road surface, the trunion joint is not subject to the weight of the vehicle and the axle 32 is in an unstable state. One can maintain the axle 32 in its stable position by means of springs or pins 34. The arms 18, 18', 19 and 19' are at right-angles at their lower ends, in order for the axle 32 to be moved at such an angle to obtain the required vertical movement to compensate for any irregularity of the road surface and the variability of the angle of the ground below the vehicle at the time of its lifting.

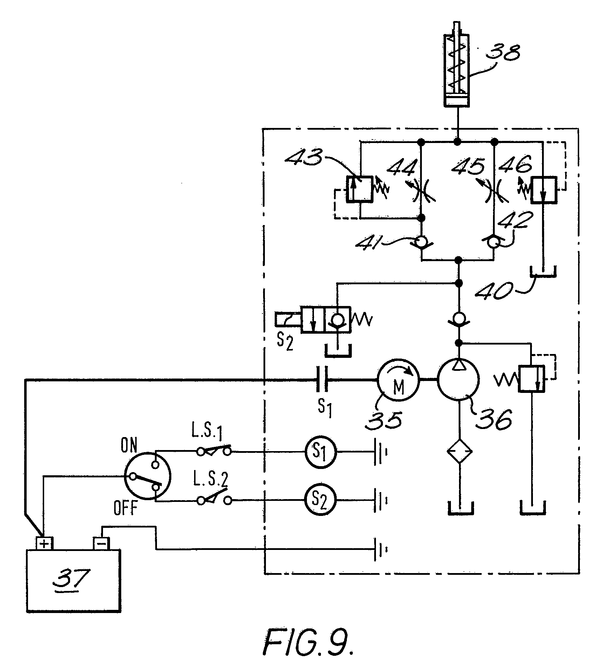

Following is a description of the hydraulic power unit Figure 9 and its operation.

The hydraulic power unit comprises an electric motor 35 which operates a hydraulic pump 36. The pump 36 forces oil into the pistons 38 and 38' of the parking device. The electric motor 35 is activated by solenoid $S_1$ which is switched off by limiting switch L.S.$_1$ after the vehicle is completely raised off the ground. The car battery 37 is the source of electrical power for this system.

The pressure in the pistons 38 and 38' is released and the device retracted by means of solenoid $S_2$ which activates the hydraulic valve 39 which drains the oil from the pistons 38 and 38' into a storage container 40. This solenoid $S_2$ is switched off by a limiting switch L.S.$_2$ once the parking device has been completely retracted.

The hydraulic components 41, 42, 43, 44, 45 and 46 serve as control dials for the operation of the device at different stages as follows:

a) Lowering of the wheels of the device until they touch the ground;

b) Lifting the vehicle until its rear wheels are raised off the ground;

c) Lowering the vehicle until the wheels of the device lose contact with the ground; and

d) Retracting the device to its original position.

Lifting the vehicle

Oil is compressed by the pump 36 and passes through valves 41 and 44, which is set to brake the auxiliary wheels 6 when lowering them (step a)) while there is no load on the device. After the auxiliary wheels 6 touch the ground at the beginning of step b), the valve 43 is activated and opened, causing the oil, which passes through pistons 38 and 38', to bypass valve 44, thereby supplying the piston maximum pressure at the time when there is maximum load.

Lowering the vehicle

In step c) braking the vehicle is accomplished via valve 45. With the beginning of step d) the pressure in the pistons 38 and 38' goes down and the command to valve 46 causes it to open and pass the oil directly to the reserve container 40, while at the same time bypassing valve 45. In this manner, the time for folding the device is reduced.

Fig. 10 illustrates for purposes of example some of the maneuvers that may be made by a front-wheel drive vehicle equipped with a device according to the invention. Briefly, such a device enables the two rear wheels of the vehicle to be lifted off the road pavement; it also enables the vehicle to be rotated about an axis preselected for right or left lateral movement. Referring to Figure 10 more specifically, the motor vehicle 1 equipped with front-wheel drive having front wheels 3, rear wheels 3' and secondary wheel assembly 4 as described above. The vehicle enters the parking space by driving its front end into the space. The rear secondary wheel assembly 4 is lowered to the operative position to raise the rear wheels 3' of the vehicle off the pavement. This wheel assembly 4 is orientated so that its axis 53 intersects front axle 54 at its left front wheel 3.

By moving the vehicle forward with the front-wheel drive, the rear of the vehicle will rotate such as to produce a large lateral movement of the rear end for a short forward movement of the front end, thereby enabling the vehicle to enter the tight parking space. It will also be seen from Figure 10 that the right front wheel on the curb side of the vehicle will move a much greater distance than the left front wheel 3 on the streetside of the vehicle because of the differential transmission. It should also be noted that this maneuver takes place with the two front wheels facing directly forward.

One of the main features of this invention is the fact that the secondary wheel assembly is mounted completely underneath the vehicle without any extensions into the interior thereof, as is the case with most prior art devices. Furthermore, the secondary wheel assembly of this invention, when in a retracted position, does not extend below the vehicle body any more than other parts of the vehicle such as the tail pipe, muffler, gas tank etc.

It is of course understood that the drive means for lowering and raising the jack and maneuvering wheel can be any electrical, mechanical, hydraulic or pneumatic drive means, as known in the art. The secondary wheel assembly can also be equipped with control means for turning the secondary wheels to any desired angle and to rotate the wheels when in an operative position to propel the vehicle forward.

## Claims

1. A lifting and maneuvering device for a front wheel drive motor vehicle (1) having a motor vehicle frame (10), a vehicle motor for propelling the motor vehicle by its front wheels (3), a differential transmission and two sets of vehicle wheels (3,3') each mounted on an axle for supporting the motor vehicle on a vehicle supporting surface, comprising:
a secondary wheel assembly (4) mounted to the motor vehicle frame (10) in proximity to the middle of the rear axle of the motor vehicle; characterised in that the secondary wheel assembly comprises
   (a) a scissors type jack (A/B) adapted to be raised and lowered between a retracted position and an operative position;
   (b) a maneuvering wheel (6) attached to the lower end of said jack (A/B) and said wheel (6) being oriented so that its axis intersects the front wheel axis in proximity to one of the front wheels (3);
   (c) drive means (35/36/38/38') for moving said jack (A/B) and maneuvering wheel (6) up or down; and
   (d) means $(S_1/L.S._1)$ for activating said drive means (35/36/38/38') so that when the jack (A/B) is in the operative position the maneuvering wheel (6) comes in contact with the vehicle supporting surface and lifts the rear set of vehicle wheels (3') off the vehicle support surface.

2. A device as in claim 1, wherein the scissor type jack constitutes a metal frame (10) to which two frameworks (A and B) are pivotally mounted, each framework comprising three sets of parallel arms (14,14',16,16',18,18', and 15,15',17,17',19,19') in pivotal relationship, said frameworks being pivotally engaged one with the other at two axes.

3. A device as in claim 2 comprising in addition guide means (28/29) to extend and retract said jack (A/B) uniformly and symmetrically.

4. A device as in claim 3, wherein said guide means comprise engaged toothed gears (28,29) on the said frameworks (A,B).

5. A device as in any one of claims 1-4, wherein the lower end of the frameworks (A,B) of said jack to which the maneuvering wheel (6) is attached comprises L-shaped arms (18,18',19,19').

6. A device as in any one of claims 1-5, wherein said maneuvering wheel (6) is attached to the jack (A/B) by means of a trunion joint (9/32/33).

7. A device as in claim 1, wherein the drive means for the jack comprise at least one hydraulic piston (38,38') pivotally mounted at one end (11) to the frame (10) and at the other end to one of the said frameworks (A or B).

8. A device as in any one of claims 1-7 comprising coil springs (30,31) mounted on said frameworks (A/B) to retract and hold said wheel (6) in a retracted position.

MOTOR
CONTROL

FIG.1.

FIG.10.

FRONT

54

53

FIG.2.

FIG.3.

11 05 89

**FIG.4.**

10  22  6  23

α

10  17 16  6  18  19

11  38  38'  19'

**FIG.5.**

17'  16' 32  18'

28
14
20
16
26
22
18
26

14'  **FIG.6a.**

20'
16'
26'
22'
18'
26'

24

A

29  **FIG.6b.**

15
21
17
27
23
19
27

15'
21'
25
17'
27'
25
23'
19'
27'

B

FIG.7.

FIG.8a.

FIG.8b.

FIG.9.